# EUROPEAN PATENT SPECIFICATION

(11) **EP 3 293 139 B1**
(45) Date of publication and mention of the grant of the patent: **24.06.2020**
(21) Application number: 17188876.1
(22) Date of filing: 31.08.2017
(51) Int. Cl.: B66B 29/00, F16D 63/00

(54) **AUXILIARY BRAKE DEVICE, BRAKE DISC ASSEMBLY, WHEEL DISC ASSEMBLY AND PASSENGER TRANSPORT DEVICE**
HILFSBREMSVORRICHTUNG, BREMSSCHEIBENANORDNUNG, RADSCHEIBENANORDNUNG UND PERSONENBEFÖRDERUNGSVORRICHTUNG
DISPOSITIF DE FREINAGE AUXILIAIRE, ENSEMBLE DE DISQUE DE FREIN, ENSEMBLE DE DISQUE DE ROUE ET DISPOSITIF DE TRANSPORT DE PASSAGERS

(30) Priority: 31.08.2016 CN 201610775792
(43) Date of publication of application: 14.03.2018
(73) Proprietor: Otis Elevator Company, Farmington, Connecticut 06032 (US)
(72) Inventor: ZHENG, Huisheng, Hangzhou, Zhejiang 310019 (CN); ZHOU, MingLi, Hangzhou, Zhejiang 310019 (CN)
(74) Representative: Dehns

(56) References cited:
- EP-A1- 2 980 436
- EP-A2- 1 426 644
- CN-A- 103 274 282
- CN-U- 202 542 669
- GB-A- 2 410 484
- US-A- 4 280 598

## Description

### Technical Field

The present invention relates to a passenger transport device, such as an escalator or a moving walk, and more particularly, to an auxiliary or additional brake device for a passenger transport device, a brake disc assembly and a wheel disc assembly of the additional brake device, and a passenger transport device provided with such an additional brake device.

### Background Art

The passenger transport devices include escalators and moving walks that are widely used in public places such as airports, shopping malls or supermarkets. The additional brake device is an auxiliary brake device on the escalator and the inclined moving walk. When the escalator needs emergency braking, the additional brake device must be actuated and the escalator can be effectively stopped. It is stipulated in the latest national standard that during braking, the additional brake device must meet the requirement that the deceleration is less than 1 m/s².

The additional brake device in the prior art includes a brake disc nested on an extension of a wheel disc, with a friction plate being provided between the brake disc and the wheel disc and maintaining the pressure therebetween. In general, an inner circumferential surface of the brake disc is in direct contact with an outer circumferential surface of the extension of the wheel disc. At the moment that the brake disc is stopped, a large impact is generated between the inner circumferential surface and the outer circumferential surface, resulting in scratches or even cold welding at the inner circumferential surface of the brake disc and the outer circumferential surface of the extension of the wheel disc. After a number of stops, the accumulation of scratches or cold welding will lead to a sharp increase in friction torque, and the braking deceleration of more than 1 m/s² would occur easily.

There is a solution to increase lubricity in the prior art, in which one or two layers of Teflon washers are added between the inner circumferential surface of the brake disc and the outer circumferential surface of the extension of the wheel disc.

US4280598A describes a brake disk particularly for railway vehicles that has a brake disk annular element mounted on a hub by at least three radially extending adaptor sleeves seated in radially opposed bores in the hub and annular element.

EP1426644A2 describes a unit assembled of a pair of friction rings accommodating a ventilation area between them formed by several bridges, and a slightly conical part positioned in the center and engaging with a stub extending from the inner edge of the outer friction ring.

CN202542669U describes an auxiliary brake of a mechanical friction disk.

### Summary of the Invention

An object of the invention is to overcome or at least alleviate the problems existing in the prior art.

To achieve the above object, according to an aspect of the present invention, there is provided an additional brake device for a passenger transport device, the additional brake device comprising:
a brake disc defining a hole and having an inner circumferential surface;
a wheel disc having a wheel disc body and an extension, the extension having an outer circumferential surface and being fitted into the hole of the brake disc, and a first friction plate being provided between the brake disc and the wheel disc body; and
a pressure holding mechanism which maintains a pressure between the brake disc and the wheel disc,
wherein an intermediate member is provided between the inner circumferential surface of the brake disc and the outer circumferential surface of the extension of the wheel disc, the intermediate member comprising a metal or alloy material, and the intermediate member is coupled to the inner circumferential surface of the brake disc or the outer circumferential surface of the extension of the wheel disc.

One or more embodiments are provided by claims 2-10.

According to further aspects of the present invention, a passenger transport device provided with an additional brake device is also provided.

According to a still further aspect of the present invention, a brake disc assembly and a wheel disc assembly are also provided.

### Brief Description of the Drawings

The disclosure of the present invention will become more readily understood with reference to the accompanying drawings. It will be readily appreciated by those skilled in the art that these drawings are merely for illustrative purposes, and are not intended to limit the scope of protection of the invention. Additionally, similar components are indicated by similar numbers in the drawings, in which:
Fig. 1 shows a perspective view of a drive sprocket and an additional brake device in a passenger transport device;
Fig. 2 shows some of the components of an additional brake device according to an embodiment of the present invention;
Fig. 3 shows an exploded view of the additional brake device according to the embodiment of the present invention;
Fig. 4 shows a sectional view of the additional brake device according to the embodiment of the present invention;
Fig. 5 shows an enlarged view of the area A in Fig. 4;
Fig. 6 shows a brake disc assembly of the additional brake device according to the embodiment of the invention; and
Fig. 7 shows a partially enlarged view of the brake disc assembly of the additional brake device according to the embodiment of the invention.

### Detailed Description

It will be readily appreciated that multiple alternative constructions and implementations may be suggested by a person of ordinary skill in the art while remaining within the scope of the invention in accordance with the technical solutions of the present invention. Therefore, the following particular embodiments and accompanied drawings are merely exemplary explanation of the technical solutions of the invention, and should not be considered as the entirety of the invention or as a definition or limitation of the technical solutions of the present invention.

Orientation phases such as "up", "down", "left", "right", "front", "rear", "frontal side", "back side", "top", "bottom" or the like mentioned or may be mentioned in the specification are defined relative to the constructions shown in the various accompanying drawings, are relative concepts, and therefore may accordingly be varied according to their different locations and different usage stages. Therefore, these or other orientation phases should not be construed as limiting either.

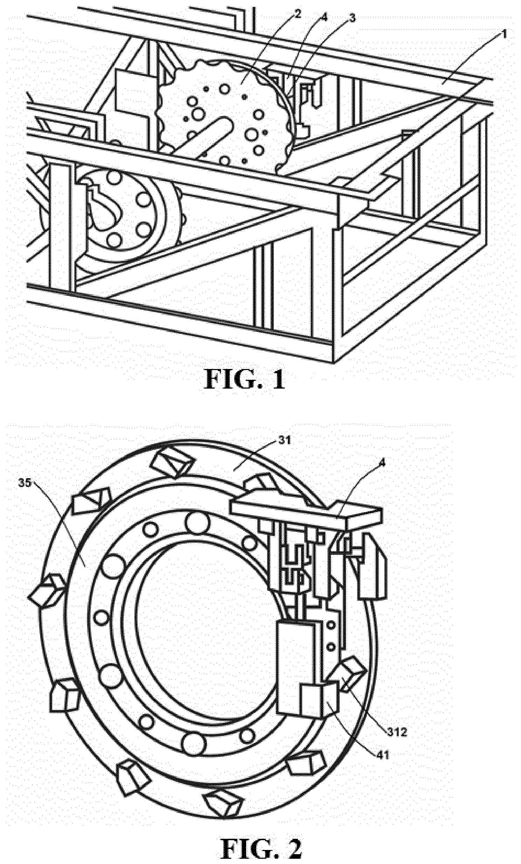

Referring first to Fig. 1, there is shown a drive sprocket and an additional brake device of a passenger transport device. The passenger transport device includes a bracket 1, which bracket 1 supports the drive sprocket 2, the additional brake device 3 and a brake trigger mechanism 4. During the normal operation of the passenger transport device, the drive sprocket 2 is rotated to drive a chain and to drive a step pedal of the passenger transport device to run in the desired direction. A braking signal is sent to the brake trigger mechanism 4 when the abnormal condition occurs or the braking is required for other reasons, and the additional brake device 3 is triggered by the brake trigger mechanism 4 so as to consume the kinetic energy of the drive sprocket 2 by friction, so that the drive sprocket 2 stops, playing the purpose of auxiliary braking.

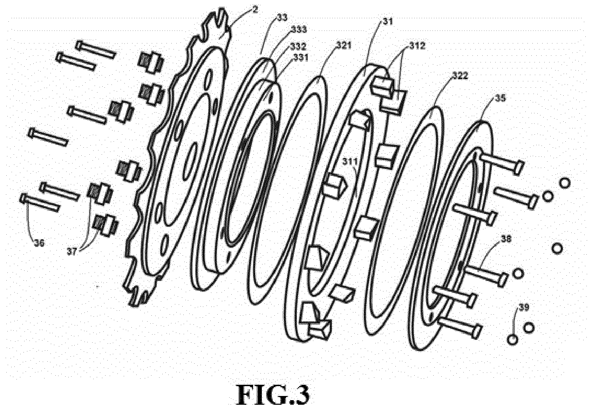

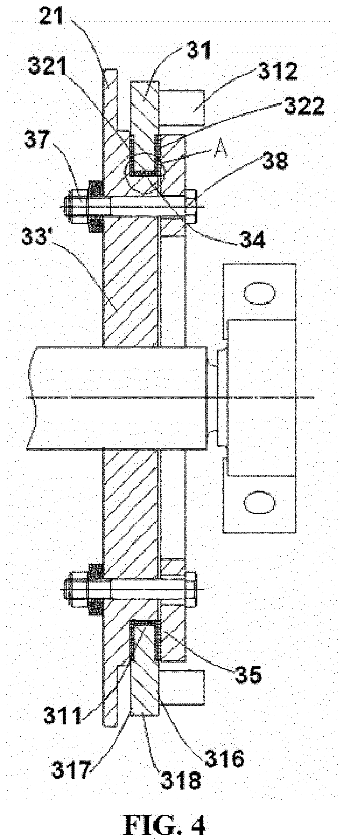

The additional brake device 3 according to an embodiment of the present invention will now be described in detail with reference to Figs. 2-4. The additional brake device 3 comprises a wheel disc 33. For example, the wheel disc 33 may be fixedly connected to the drive sprocket 2 by means of a fastener 36 such that the wheel disc 33 is rotated together with the drive sprocket 2, or alternatively, the wheel disc is integrated with the drive sprocket as a wheel disc 33' shown in Fig. 4, which includes a drive sprocket portion 21. The wheel disc 33 has a substantially disc-shaped body 333 and an extension 331 extending axially from the body 333. In general, the extension 331 of the wheel disc 33 has a smaller outer diameter than the body 333 of the wheel disc, and the extension 331 of the wheel disc 33 has an outer circumferential surface 332.

The additional brake device also includes a brake disc 31. the brake disc 31 is substantially annular, and a hole is defined in the brake disc 31. The brake disc 31 has an outer circumferential surface 318, an inner circumferential surface 311, and a first side face 317 facing the wheel disc 33 and a second side face 316 facing a compression disc 35. The extension 331 of the wheel disc 33 is fitted in the hole of the brake disc 31 so that the outer circumferential surface 332 of the extension 331 of the wheel disc 33 is close to and opposite the inner circumferential surface 311 of the brake disc 31. In other words, the substantially annular brake disc 31 is nested over the extension 331 of the wheel disc 33. A first friction plate 321 is provided between the body 333 of the wheel disc 33 and the first side face 317 of the brake disc 31, preferably, as shown in Fig. 4, the first friction plate 321 is provided in a friction plate groove of the first side face 317 of the brake disc 31. If the inner circumferential surface 311 of the brake disc 31 is brought into direct contact with the outer circumferential surface 332 of the extension 331 of the wheel disc 33, a large impact is generated between the two surfaces at the moment that the brake disc 31 is stopped, resulting in scratches or even cold welding at the inner circumferential surface 311 of the brake disc 31 and the outer circumferential surface 332 of the extension 331 of the wheel disc 33, which will cause the braking deceleration of the additional brake device to increase and even to exceed the criterion of 1 m/s². In some embodiments, a plurality of interference stoppers 312 are distributed circumferentially at the outer edge of the second side face 316 of the brake disc 31, and the plurality of interference stoppers 312 are configured to cooperate with the brake trigger mechanism 4. In some embodiments, a plurality of interference stoppers 312 may, for example, be welded to the outer edge of the brake disc 31, or a plurality of interference stoppers 312 may be integrally formed with the brake disc 31. In some embodiments, the brake disc 31 may be in the form of a ratchet to cooperate with the brake trigger mechanism 4.

The additional brake device 3 also includes a pressure holding mechanism which holds the pressure between the wheel disc 33 and the brake disc 31. In some embodiments, the pressure holding mechanism comprises a compression disc 35, which compression disc 35 is also substantially annular. The compression disc 35 is provided opposite the second side face 316 of the brake disc 31. A second friction plate 322 is provided between the compression disc 35 and the second side face 316 of the brake disc 31. Preferably, as shown in Fig. 4, the second friction plate 322 is provided in a friction plate groove at the second side face 316 of the brake disc 31. A plurality of connecting bolts 38 pass through the compression disc 35 and the wheel disc 33 or the wheel disc 33' integrated with the drive sprocket portion, and an elastic member, such as a nut 37 having a disc spring, is arranged on the connecting bolt 38 to provide a pressure between the compression disc 35 and the wheel disc 33. By means of the pressure holding mechanism, an appropriate pressure between each of the wheel disc 33 and the brake disc 31 and the first friction plate 321 and an appropriate pressure between each of the compression disc 35 and the brake disc 31 and the second friction plate 312 may be provided. The braking deceleration or braking torque is determined by the magnitude of the pressures and the friction coefficient of the friction plates. It is desirable that the friction between the inner circumferential surface 311 of the brake disc 31 and the outer circumferential surface 332 of the extension 331 of the wheel disc 33 is minimized and remains stable after multiple braking.

Fig. 4 shows a sectional view of the various components of the additional brake device after assembled. During normal operation, a shaft of the wheel disc 33' having the drive sprocket portion 21 is, for example, driven by a motor and is constantly rotated to drive the running of the chain and the step pedal. The compression disc 35 also rotates together with the wheel disc 33' due to the action of the respective connecting bolts 38, and the nut 37 provided with the elastic member at one end of the connecting bolt 38 provides a pressure between the wheel disc 33' and the compression disc 35. Since the pressure between each of the wheel disc 33' and the compression disc 35 and the brake disc 31 is maintained, the brake disc 31 is rotated along with the wheel disc 33' under the action of a static friction force. In other words, the components of the additional brake device 3 are rotated together with the wheel disc 33'. The brake trigger mechanism 4 as shown in Fig. 2 may be triggered by an electronic or mechanical signal when an abnormal condition or other conditions requiring auxiliary braking occur. After the brake trigger mechanism 4 receives the braking signal, a trigger arm 41 thereof moves to interfere with the interference stoppers 312 on the outer edge of the brake disc 31 of the additional brake device 3 to stop the brake disc 31. The brake disc 31 moves relative to the other components of the additional brake device 3 due to the interference of the brake trigger mechanism 4 and consumes the kinetic energy of the wheel disc 33' by means of friction, specifically, for example, by means of the friction between the brake disc 31 and the wheel disc 33' and the first friction plate 321 and the friction between the brake disc 31 and the compression disc 35 and the second friction plate 312, so that the wheel disc 33' with the sprocket portion 21 is continuously decelerated until it is stopped.

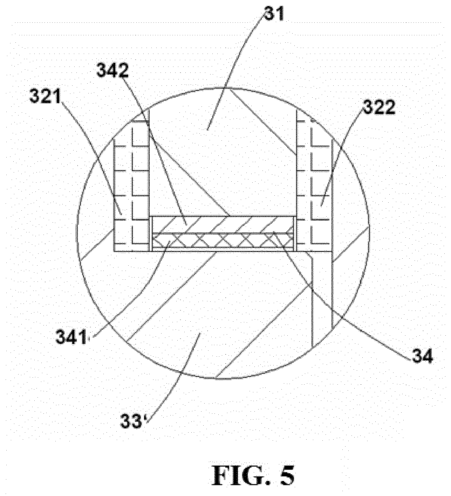

As shown in Figs. 4 and 5, the additional brake device according to the embodiment of the present invention is additionally provided with an intermediate member 34 between the inner circumferential surface 311 of the brake disc 31 and the outer circumferential surface of the extension of the wheel disc 33', the intermediate member 34 comprising a metal or alloy material. Based on the characteristics of the metal and alloy material, the coefficient of thermal expansion of the intermediate member 34 is small than or close to that of the brake disc 31 and the wheel disc 33', so that the intermediate member 34 does not substantially interfere with the brake disc 31 and the wheel disc 33' due to temperature change, to avoid the expansion of the intermediate member to cause the occurrence of stuck phenomenon between the brake disc and wheel disc to cause a larger deceleration at the moment of braking and thus to damage a linked component or a main drive. Further, based on the characteristics of the metal and alloy materials, the intermediate member 34 of the metal and alloy material is less susceptible to deteriorate and has a longer life than that of a plastic or polymeric material such as Teflon.

In some embodiments, the intermediate member 34 is coupled to the inner circumferential surface of the brake disc 31 or the outer circumferential surface of the extension of the wheel disc 33'.

For example, in some embodiments, the intermediate member 34 may take the form of a bushing which may be made to have an outer diameter slightly larger than the inner diameter of the inner circumferential surface of the brake disc 31. The intermediate member 34 in the form of a bushing can then be interference-fitted into the inner circumferential surface of the brake disc 31 so as to prevent the relative movement between the intermediate member and the brake disc 31.

In some embodiments, the bushing may be made to have an inner diameter slightly smaller than the outer diameter of the extension of the wheel disc 33'. The intermediate member 34 in the form of a bushing can then be interference-fitted to the outer circumference surface of the extension of the wheel disc 33'.

In some embodiments, the intermediate member 34 may be made to be strip-shaped, and is bent and fitted into the inner circumferential surface of the brake disc 31.

In some embodiments, the intermediate member 34 in the form of a bushing may be coupled to the inner circumferential surface of the brake disc 31 or the outer circumferential surface of the extension of the wheel disc 33' by welding or bonding or other suitable means.

In some embodiments, instead of the bushing, the intermediate member 34 may also be in the form of a coating applied to the inner circumferential surface of the brake disc 31 or the outer circumferential surface of the extension of the wheel disc 33'. In some embodiments, an intermediate member 34 in the form of two layers of coatings may be used.

In some embodiments, the inner circumferential surface of the brake disc 31 and the outer circumferential surface of the extension of the wheel disc 33' may be each provided with an intermediate member 34, for example, an intermediate member in the form of a coating may be provided on the inner circumferential surface of the brake disc 31, while an intermediate member in the form of a bushing may be provided on the outer circumferential surface of the extension of the wheel disc 33' in an interference-fit manner.

Compared to the use of the washer, the use of the intermediate member 34 coupled to the inner circumferential surface of the brake disc 31 or the outer circumferential surface of the extension of the wheel disc 33' makes it possible to only have a pair of components moving relatively in the circumferential direction, so that the intermediate member only needs to be provided with a material having a lubricating property on one surface to resist collision and friction. In addition, the intermediate member fixedly coupled to the inner circumferential surface of the brake disc 31 or the outer circumferential surface of the extension of the wheel disc 33' avoids the problem that the braking torque is unstable due to the movement of the washer.

In some embodiments, the intermediate member 34 includes a base layer 342 and an additional layer 341 combined with each other. The base layer 342 is configured to be coupled to the inner circumferential surface of the brake disc or the outer circumferential surface of the extension. For example, in the case that the intermediate member 34 is coupled to the inner circumferential surface of the brake disc, the base layer 342 is close to and coupled to the inner circumferential surface of the brake disc; on the contrary, in the case that the intermediate member 34 is coupled to the outer circumferential surface of the extension of the wheel disc, the base layer 342 is close to and coupled to the outer circumferential surface of the extension of the wheel disc. The additional layer 341 is configured to resist impact and friction. In embodiments where the intermediate member 34 takes the form of a bushing, the base layer 342 may be selected from metal materials having a certain strength, such as steel or copper or its alloy or any combination of the above materials. The base layer 342 has a strength such that it can be securely fixed to the inner circumferential surface of the brake disc or the outer circumferential surface of the extension of the wheel disc. For the embodiments of any of the intermediate members, the additional layer 341 may use a material suitable for resistance to impact and friction, for example, a self-lubricating material such as a graphite alloy, a copper alloy, a polymeric material, etc. The graphite alloy may include, for example, an aluminum graphite alloy, a copper graphite alloy, a silver graphite alloy, a silver nickel graphite alloy or a graphite steel, and any combination thereof. In embodiments where the additional layer is composed of a polymeric material, the polymeric material may be, for example, a high molecular weight polyethylene, an ultrahigh molecular weight polyethylene, a polyurethane, a polytetrafluoroethylene or a polyoxymethylene resin, and any combination thereof.

In some embodiments, the base layer 342 may be substantially composed of steel or copper or its alloy, and the additional layer 341 maybe substantially composed of a copper graphite alloy. For the intermediate member having such components, the braking torque fluctuation is very small in 100 full-load brake tests and no scratches or cold welding are found on the circumferential contact face.

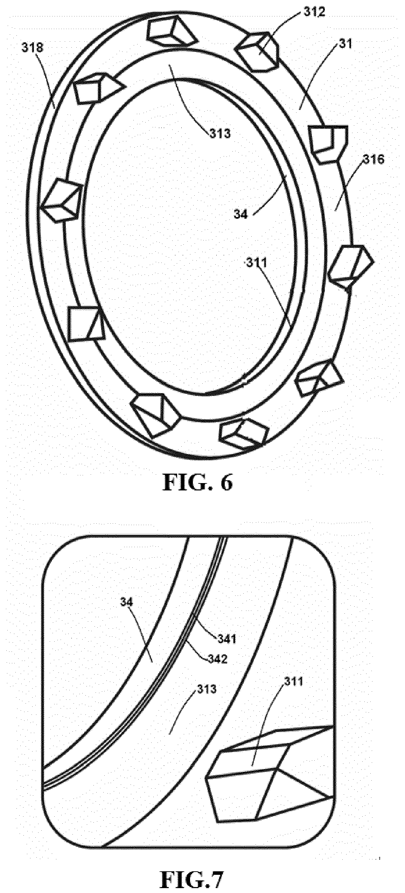

Referring to Figs. 6 and 7, according to a further aspect of the present invention, there is provided a brake disc assembly comprising a brake disc 31, the brake disc 31 being substantially annular and having a hole. The brake disc 31 includes an inner circumferential surface 311, an outer circumferential surface 318, and a first side face and a second side face 316. The brake disc 31 also includes an intermediate member 34 coupled to the inner circumferential surface 31 of the brake disc 31. In some embodiments, the intermediate member 34 includes a metal or alloy material. In some embodiments, the intermediate member 34 may be interference-fitted to the inner circumferential surface of the brake disc 31, or coupled to the inner circumferential surface of the brake disc 31 by welding, bonding, or other means. In some embodiments, as shown in Fig. 7, the intermediate member 34 may have a base layer 342 and an additional layer 341, and the base layer 342 of the intermediate member 34 is close to and coupled to the inner circumferential surface of the brake disc 31. The specific material of the intermediate member 34 can be referred to above. In some embodiments, a friction plate groove 313 for accommodating the friction plate is provided on one or two sides of the brake disc 31. In some embodiments, the interference stoppers 312 are circumferentially distributed at the outer edge of the first side face or the second side face 316 of the brake disc 31.

According to a still further aspect of the present invention, there is provided a wheel disc assembly for an additional brake device of a passenger transport device, the wheel disc assembly comprising a wheel disc. The wheel disc comprises a wheel disc body 333 and an extension 331, the extension 331 having a smaller diameter than the wheel disc body 333 and having an outer circumferential surface 332. The intermediate member is attached to the outer circumferential surface of the extension 331 of the wheel disc. In some embodiments, the intermediate member 34 includes a metal or alloy material. In some embodiments, the intermediate member 34 may be interference-fitted to the outer circumferential surface of the extension 331 of the wheel disc, or coupled to the outer circumferential surface of the extension 331 of the wheel disc by welding, bonding, or other means. In some embodiments, the intermediate member 34 may have a base layer 342 and an additional layer 341, and the base layer 342 of the intermediate member is close to and coupled to the outer circumferential surface of the extension 331 of the wheel disc. The specific material of the intermediate member 34 can be referred to above. In some embodiments, the wheel disc may be integrally formed with the sprocket of the passenger transport device. In other words, the wheel disc may include a drive sprocket portion.

A passenger transport device may comprise an additional brake device according to various embodiments of the present invention, the passenger transport device including an escalator and a moving walk.

The particular embodiments described above are merely for describing the principle of the present invention more clearly, where various components are clearly illustrated or described to make the principle of the present invention be more readily understood. A person skilled in the art could easily make various modifications or changes on the present invention without departing from the scope of the present invention as defined by the claims. Therefore, it will be understood that these modifications or changes should all be contained in the scope of patent protection of the present invention.

## Claims

1. An additional brake device (3) for a passenger transport device, the additional brake device (3) comprising:
a brake disc (31) defining a hole and having an inner circumferential surface (311);
a wheel disc (33) having a wheel disc body (333) and an extension (331), the extension (331) being fitted into the hole of the brake disc (31) and having an outer circumferential surface (332), and a first friction plate (321) being provided between the brake disc (31) and the wheel disc body (333); and
a pressure holding mechanism which maintains a pressure between the brake disc (31) and the wheel disc (33);
wherein an intermediate member (34) is provided between the inner circumferential surface (311) of the brake disc (31) and the outer circumferential surface (332) of the extension (331) of the wheel disc (33); and
the intermediate member (34) is coupled to the inner circumferential surface (311) of the brake disc (31) or the outer circumferential surface (332) of the extension (331) of the wheel disc (33);
**characterized in that**:
the intermediate member (34) comprises a metal or alloy material.

2. The additional brake device (3) according to claim 1, wherein the intermediate member (34) is a bushing, and optionally:
the bushing is interference-fitted to the inner circumferential surface (311) of the brake disc (31) or the outer circumferential surface (332) of the extension (331) of the wheel disc (33); or
the bushing is welded or bonded to the inner circumferential surface (311) of the brake disc (31) or the outer circumferential surface (332) of the extension (331) of the wheel disc (33).

3. The additional brake device (3) according to claim 1, wherein the intermediate member (34) is a coating applied to the inner circumferential surface (311) of the brake disc (31) or the outer circumferential surface (332) of the extension (331) of the wheel disc (33).

4. The additional brake device (3) according to any preceding claim, wherein the intermediate member (34) comprises a base layer (342) and an additional layer (341) combined with each other, wherein the base layer (342) is configured to be coupled to the inner circumferential surface (311) of the brake disc (31) or the outer circumferential surface (332) of the extension (331).

5. The additional brake device (3) according to claim 4, wherein:
(i) the base layer (342) is substantially composed of metal, and the additional layer (341) is substantially composed of a graphite alloy; or
(ii) the base layer (342) comprises steel or copper or a combination thereof, and the additional layer (341) comprises a copper graphite alloy; or
(iii) the base layer (342) is substantially composed of metal, and the additional layer (341) is substantially composed of a polymeric material; or
(iv) the base layer (342) comprises steel or copper or a combination thereof, and the additional layer (341) comprises a polymeric polyethylene, an ultrahigh molecular weight polyethylene, a polyurethane, a polytetrafluoroethylene or a polyoxymethylene resin, and a combination thereof.

6. The additional brake device (3) according to claim 4, wherein the base layer (342) comprises a metallic material such as steel, iron, aluminum or copper, and a combination thereof.

7. The additional brake device (3) according to claim 4, wherein:
(i) the additional layer (341) comprises a self-lubricating material; or
(ii) the additional layer (341) comprises a graphite alloy such as an aluminum graphite alloy, a copper graphite alloy, a silver graphite alloy, a silver nickel graphite alloy or a graphite steel, and a combination thereof; or
(iii) the additional layer (341) comprises a copper alloy; or
(iv) the additional layer (341) comprises a polymeric material, such as a high molecular weight polyethylene, an ultrahigh molecular weight polyethylene, a polyurethane, a polytetrafluoroethylene or a polyoxymethylene resin, and a combination thereof.

8. The additional brake device (3) according to any preceding claim, wherein the pressure holding mechanism comprises a compression disc (35), the wheel disc (33) and the compression disc (35) are located on both sides of the brake disc (31), a second friction plate (322) is provided between the compression disc (35) and the brake disc (31), a plurality of bolts (38) pass through the wheel disc (33) and the compression disc (35), and an elastic member (37) is provided on the bolt to provide a pressure; and optionally:
the brake disc (31) is provided, on one or two sides, with a friction plate groove for accommodating the first friction plate (321) and/or the second friction plate (322).

9. The additional brake device (3) according to any preceding claim, wherein the brake disc (31) further comprises a plurality of interference stoppers (312) distributed circumferentially on one side of the brake disc (31); and optionally:
the plurality of interference stoppers (312) are welded to the brake disc (31), or the plurality of interference stoppers (312) are integrally formed with the brake disc (31).

10. The additional brake device (3) according to any preceding claim, wherein:
the brake disc (31) is formed as a ratchet structure; and/ or
the wheel disc (33) is fixedly connected to a drive sprocket (2) of the passenger transport device, or the wheel disc (33) is integrally formed with the drive sprocket (2) of the passenger transport device.

11. A passenger transport device, comprising the additional brake device (3) as claimed in any one of claims 1-10.

12. A brake disc assembly for the additional brake device (3) of claims 1 to 10, the brake disc assembly comprising a brake disc (31) defining a hole and having an inner circumferential surface (311), wherein the brake disc assembly further comprises an intermediate member (34) coupled to the inner circumferential surface (311) of the brake disc (31), the intermediate member comprising a metal or alloy material;
wherein the intermediate member (34) comprises a base layer (342) and an additional layer (341) combined with each other, wherein the base layer (342) is coupled to the inner circumferential surface (311) of the brake disc (31).

13. The brake disc assembly according to claim 12, wherein:
the intermediate member (34) is a bushing, and optionally the bushing is interference-fitted or welded or bonded to the inner circumferential surface (311) of the brake disc (31);
and optionally the base layer (342) is substantially composed of metal, and the additional layer (341) is substantially composed of a graphite alloy.

14. A wheel disc assembly for the additional brake device (3) of claims 1 to 10, the wheel disc assembly comprising a wheel disc (33) which has a wheel disc body (333) and an extension (331), the extension (331) having an outer circumferential surface (332), wherein the wheel disc assembly further comprises an intermediate member (34) coupled to the outer circumferential surface (332) of the extension of the wheel disc (33), the intermediate member comprising a metal or alloy material;
wherein the intermediate member (34) comprises a base layer (342) and an additional layer (341) combined with each other, wherein the base layer (342) is coupled to the outer circumferential surface (332) of the extension (331) of the wheel disc (33).

15. The wheel disc assembly according to claim 14, wherein:
the intermediate member (34) is a bushing, and optionally the bushing is interference-fitted or welded or bonded to the outer circumferential surface (332) of the extension (331) of the wheel disc (33);
and optionally the base layer (342) is substantially composed of metal, and the additional layer (341) is substantially composed of a graphite alloy; and/ or
the wheel disc (33) is integrally formed with a drive sprocket (2) of a passenger transport device.

## Patentansprüche

1. Zusatzbremsvorrichtung (3) für eine Personenbeförderungsvorrichtung, wobei die Zusatzbremsvorrichtung (3) Folgendes umfasst:
eine Bremsscheibe (31), die ein Loch definiert und eine Innenumfangsfläche (311) aufweist;
eine Radscheibe (33) mit einem Radscheibenkörper (333) und einer Verlängerung (331), wobei die Verlängerung (331) in das Loch der Bremsscheibe (31) eingepasst ist und eine Außenumfangsfläche (332) aufweist, und wobei eine erste Reibplatte (321) zwischen der Bremsscheibe (31) und dem Radscheibenkörper (333) bereitgestellt ist; und
einen Druckhaltemechanismus, der einen Druck zwischen der Bremsscheibe (31) und der Radscheibe (33) aufrechterhält;
wobei ein Zwischenelement (34) zwischen der Innenumfangsfläche (311) der Bremsscheibe (31) und der Außenumfangsfläche (332) der Verlängerung (331) der Radscheibe (33) bereitgestellt ist; und
das Zwischenelement (34) an die Innenumfangsfläche (311) der Bremsscheibe (31) oder die Außenumfangsfläche (332) der Verlängerung (331) der Radscheibe (33) gekoppelt ist;
**dadurch gekennzeichnet, dass**:
das Zwischenelement (34) ein Metall- oder Legierungsmaterial umfasst.

2. Zusatzbremsvorrichtung (3) nach Anspruch 1, wobei das Zwischenelement (34) eine Buchse ist, und optional:
die Buchse mit der Innenumfangsfläche (311) der Bremsscheibe (31) oder der Außenumfangsfläche (332) der Verlängerung (331) der Radscheibe (33) pressgepasst ist; oder
die Buchse an die Innenumfangsfläche (311) der Bremsscheibe (31) oder die Außenumfangsfläche (332) der Verlängerung (331) der Radscheibe (33) geschweißt oder gebondet ist.

3. Zusatzbremsvorrichtung (3) nach Anspruch 1, wobei das Zwischenelement (34) eine Beschichtung ist, die auf die Innenumfangsfläche (311) der Bremsscheibe (31) oder die Außenumfangsfläche (332) der Verlängerung (331) der Radscheibe (33) aufgebracht ist.

4. Zusatzbremsvorrichtung (3) nach einem der vorstehenden Ansprüche, wobei das Zwischenelement (34) eine miteinander kombinierte Grundschicht (342) und Zusatzschicht (341) umfasst, wobei die Grundschicht (342) dazu konfiguriert ist, an die Innenumfangsfläche (311) der Bremsscheibe (31) oder die Außenumfangsfläche (332) der Verlängerung (331) gekoppelt zu sein.

5. Zusatzbremsvorrichtung (3) nach Anspruch 4, wobei:
(i) die Grundschicht (342) im Wesentlichen aus Metall besteht und die Zusatzschicht (341) im Wesentlichen aus einer Grafit-Legierung besteht; oder
(ii) die Grundschicht (342) Stahl oder Kupfer oder Kombinationen davon umfasst und die Zusatzschicht (341) eine Kupfer-Grafit-Legierung umfasst; oder
(iii)die Grundschicht (342) im Wesentlichen aus Metall besteht und die Zusatzschicht (341) im Wesentlichen aus einem Polymermaterial besteht; oder
(iv) die Grundschicht (342) Stahl oder Kupfer oder eine Kombination davon umfasst und die Zusatzschicht (341) ein polymeres Polyethylen, ein Polyethylen mit ultrahohem Molekulargewicht, ein Polyurethan-, ein Polytetrafluorethylen- oder ein Polyoxymethylenharz und eine Kombination davon umfasst.

6. Zusatzbremsvorrichtung (3) nach Anspruch 4, wobei die Grundschicht (342) ein metallisches Material wie etwa Stahl, Eisen, Aluminium oder Kupfer und eine Kombination davon umfasst.

7. Zusatzbremsvorrichtung (3) nach Anspruch 4, wobei:
(i) die Zusatzschicht (341) ein selbstschmierendes Material umfasst; oder
(ii) die Zusatzschicht (341) eine Grafit-Legierung wie etwa eine Aluminium-Grafit-Legierung, eine Kupfer-Grafit-Legierung, eine Silber-Grafit-Legierung, eine Silber-Nickel-Grafit-Legierung oder ein Grafit-Stahl und einen Kombination davon umfasst; oder
(iii)die Zusatzschicht (341) eine Kupfer-Legierung umfasst; oder
(iv) die Zusatzschicht (341) ein Polymermaterial wie etwa ein Polyethylen mit hohem Molekulargewicht, ein Polyethylen mit ultrahohem Molekulargewicht, ein Polyurethan-, ein Polytetrafluorethylen- oder ein Polyoxymethylenharz und eine Kombination davon umfasst.

8. Zusatzbremsvorrichtung (3) nach einem der vorstehenden Ansprüche, wobei der Druckhaltemechanismus eine Druckscheibe (35) umfasst, die Radscheibe (33) und die Druckscheibe (35) auf beiden Seiten der Bremsscheibe (31) angeordnet sind, eine zweite Reibplatte (322) zwischen der Druckscheibe (35) und der Bremsscheibe (31) bereitgestellt ist, eine Vielzahl von Bolzen (38) durch die Radscheibe (33) und die Druckscheibe (35) hindurchgehen und ein elastisches Element (37) auf dem Bolzen bereitgestellt ist, um einen Druck bereitzustellen; und optional:
die Bremsscheibe (31) auf einer oder zwei Seiten mit einer Reibplattennut zum Aufnehmen der ersten Reibplatte (321) und/oder der zweiten Reibplatte (322) bereitgestellt ist.

9. Zusatzbremsvorrichtung (3) nach einem der vorstehenden Ansprüche, wobei die Bremsscheibe (31) ferner einer Vielzahl von Interferenz-Stoppern (312) umfasst, die in Umfangsrichtung auf einer Seite der Bremsscheibe (31) verteilt sind; und optional:
die Vielzahl von Interferenz-Stoppern (312) an die Bremsscheibe (31) geschweißt ist oder die Vielzahl von Interferenz-Stoppern (312) einstückig mit der Bremsscheibe (31) gebildet ist.

10. Zusatzbremsvorrichtung (3) nach einem der vorstehenden Ansprüche, wobei:
die Bremsscheibe (31) als eine Ratschenstruktur gebildet ist; und/oder
die Radscheibe (33) fest mit einem Antriebsritzel (2) der Personenbeförderungsvorrichtung verbunden ist oder die Radscheibe (33) einstückig mit dem Antriebsritzel (2) der Personenbeförderungsvorrichtung gebildet ist.

11. Personenbeförderungsvorrichtung, umfassend die Zusatzbremsvorrichtung (3) nach einem der Ansprüche 1-10.

12. Bremsscheibenanordnung für die Zusatzbremsvorrichtung (3) nach den Ansprüchen 1 bis 10, wobei die Bremsscheibenanordnung eine Bremsscheibe (31) umfasst, die ein Loch definiert und eine Innenumfangsfläche (311) aufweist, wobei die Bremsscheibenanordnung ferner ein Zwischenelement (34) umfasst, das an die Innenumfangsfläche (311) der Bremsscheibe (31) gekoppelt ist, wobei das Zwischenelement ein Metall- oder ein Legierungsmaterial umfasst;
wobei das Zwischenelement (34) eine miteinander kombinierte Grundschicht (342) und Zusatzschicht (341) umfasst, wobei die Grundschicht (342) an die Innenumfangsfläche (311) der Bremsscheibe (31) gekoppelt ist.

13. Bremsscheibenanordnung nach Anspruch 12, wobei:
das Zwischenelement (34) eine Buchse ist und die Buchse optional mit der Innenumfangsfläche (311) der Bremsscheibe (31) pressgepasst oder geschweißt oder gebondet ist;
und optional die Grundschicht (342) im Wesentlichen aus Metall besteht und die Zusatzschicht (341) im Wesentlichen aus einer Grafit-Legierung besteht.

14. Radscheibenanordnung für die Zusatzbremsvorrichtung (3) nach den Ansprüchen 1 bis 10, wobei die Radscheibenanordnung eine Radscheibe (33) umfasst, die einen Radscheibenkörper (333) und eine Verlängerung (331) aufweist, wobei die Verlängerung (331) eine Außenumfangsfläche (332) aufweist, wobei die Radscheibenanordnung ferner ein Zwischenelement (34) umfasst, das an die Außenumfangsfläche (332) der Verlängerung der Radscheibe (33) gekoppelt ist, wobei das Zwischenelement ein Metall- oder Legierungsmaterial umfasst;
wobei das Zwischenelement (34) eine miteinander kombinierte Grundschicht (342) und Zusatzschicht (341) umfasst, wobei die Grundschicht (342) an die Außenumfangsfläche (332) der Verlängerung (331) der Radscheibe (33) gekoppelt ist.

15. Radscheibenanordnung nach Anspruch 14, wobei:
das Zwischenelement (34) eine Buchse ist und die Buchse optional mit der Außenumfangsfläche (332) der Verlängerung (331) der Radscheibe (33) pressgepasst oder geschweißt oder gebondet ist;
und optional die Grundschicht (342) im Wesentlichen aus Metall besteht und die Zusatzschicht (341) im Wesentlichen aus einer Grafit-Legierung besteht; und/oder
die Radscheibe (33) einstückig mit dem Antriebsritzel (2) einer Personenbeförderungsvorrichtung gebildet ist.

## Revendications

1. Dispositif de freinage supplémentaire (3) pour un dispositif de transport de passagers, le dispositif de freinage supplémentaire (3) comprenant :
un disque de frein (31) définissant un trou et ayant une surface circonférentielle intérieure (311) ;
un disque de roue (33) ayant un corps de disque de roue (333) et une extension (331), l'extension (331) étant fixée dans le trou du disque de frein (31) et ayant une surface circonférentielle extérieure (332), et une première plaque de friction (321) étant prévue entre le disque de frein (31) et le corps de disque de roue (333) ; et
un mécanisme de maintien de pression qui maintient une pression entre le disque de frein (31) et le disque de roue (33) ;
dans lequel un élément intermédiaire (34) est prévu entre la surface circonférentielle intérieure (311) du disque de frein (31) et la surface circonférentielle extérieure (332) de l'extension (331) du disque de roue (33) ; et
l'élément intermédiaire (34) est couplé à la surface circonférentielle intérieure (311) du disque de frein (31) et la surface circonférentielle extérieure (332) de l'extension (331) du disque de roue (33) ;
**caractérisé en ce que** :
l'élément intermédiaire (34) comprend un matériau en métal ou en alliage.

2. Dispositif de freinage supplémentaire (3) selon la revendication 1, dans lequel l'élément intermédiaire (34) est une douille, et éventuellement :
la douille est fixée avec interférence à la surface circonférentielle intérieure (311) du disque de frein (31) ou à la surface circonférentielle extérieure (332) de l'extension (331) du disque de roue (33) ; ou
la douille est soudée ou collée à la surface circonférentielle intérieure (311) du disque de frein (31) ou à la surface circonférentielle extérieure (332) de l'extension (331) du disque de roue (33).

3. Dispositif de freinage supplémentaire (3) selon la revendication 1, dans lequel l'élément intermédiaire (34) est un revêtement appliqué à la surface circonférentielle intérieure (311) du disque de frein (31) ou à la surface circonférentielle extérieure (332) de l'extension (331) du disque de roue (33).

4. Dispositif de freinage supplémentaire (3) selon une quelconque revendication précédente, dans lequel l'élément intermédiaire (34) comprend une couche de base (342) et une couche supplémentaire (341) combinées l'une à l'autre, dans lequel la couche de base (342) est configurée pour être couplée à la surface circonférentielle intérieure (311) du disque de frein (31) ou à la surface circonférentielle extérieure (332) de l'extension (331).

5. Dispositif de freinage supplémentaire (3) selon la revendication 4, dans lequel :
(i) la couche de base (342) est essentiellement composée de métal et la couche supplémentaire (341) est essentiellement composée d'un alliage de graphite ; ou
(ii) la couche de base (342) comprend de l'acier ou du cuivre ou une combinaison de ceux-ci, et la couche supplémentaire (341) comprend un alliage de graphite et de cuivre ; ou
(iii) la couche de base (342) est essentiellement composée de métal, et la couche supplémentaire (341) est essentiellement composée d'un matériau polymère ; ou
(iv) la couche de base (342) comprend de l'acier ou du cuivre ou une combinaison de ceux-ci, et la couche supplémentaire (341) comprend un polyéthylène polymère, un polyéthylène de poids moléculaire ultra élevé, un polyuréthane, un polytétrafluoroéthylène ou une résine de polyoxyméthylène, et une combinaison de ceux-ci.

6. Dispositif de freinage supplémentaire (3) selon la revendication 4, dans lequel la couche de base (342) comprend un matériau métallique tel que l'acier, le fer, l'aluminium ou le cuivre, et une combinaison de ceux-ci.

7. Dispositif de freinage supplémentaire (3) selon la revendication 4, dans lequel :
(i) la couche supplémentaire (341) comprend un matériau autolubrifiant ; ou
(ii) la couche supplémentaire (341) comprend un alliage de graphite tel qu'un alliage de graphite et d'aluminium, un alliage de graphite et de cuivre, un alliage de graphite et d'argent, un alliage de graphite, d'argent et de nickel ou un acier de graphite, et une combinaison de ceux-ci ; ou
(iii) la couche supplémentaire (341) comprend un alliage de cuivre ; ou
(iv) la couche supplémentaire (341) comprend un matériau polymère, tel qu'un polyéthylène de poids moléculaire élevé, un polyéthylène de poids moléculaire ultra élevé, un polyuréthane, un polytétrafluoroéthylène ou une résine de polyoxyméthylène, et une combinaison de ceux-ci.

8. Dispositif de freinage supplémentaire (3) selon une quelconque revendication précédente, dans lequel le mécanisme de maintien de pression comprend un disque de compression (35), le disque de roue (33) et le disque de compression (35) sont situés des deux côtés du disque de frein (31), une seconde plaque de friction (322) est prévue entre le disque de compression (35) et le disque de frein (31), une pluralité de boulons (38) traversent le disque de roue (33) et le disque de compression (35), et un élément élastique (37) est prévu sur le boulon pour fournir une pression ; et éventuellement :
le disque de frein (31) est pourvu, sur un ou deux côtés, d'une rainure de plaque de friction pour loger la première plaque de friction (321) et/ou la seconde plaque de friction (322) .

9. Dispositif de freinage supplémentaire (3) selon une quelconque revendication précédente, dans lequel le disque de frein (31) comprend en outre une pluralité de butées d'interférence (312) réparties circonférentiellement sur un côté du disque de frein (31) ; et éventuellement :
la pluralité de butées d'interférence (312) sont soudées au disque de frein (31), ou la pluralité de butées d'interférence (312) sont formées d'un seul tenant avec le disque de frein (31).

10. Dispositif de freinage supplémentaire (3) selon une quelconque revendication précédente, dans lequel :
le disque de frein (31) est formé comme une structure à cliquet ; et/ou
le disque de roue (33) est relié de manière fixe à un pignon d'entraînement (2) du dispositif de transport de passagers, ou le disque de roue (33) est formé d'un seul tenant avec le pignon d'entraînement (2) du dispositif de transport de passagers.

11. Dispositif de transport de passagers, comprenant le dispositif de freinage supplémentaire (3) selon l'une quelconque des revendications 1 à 10.

12. Ensemble disque de frein pour le dispositif de freinage supplémentaire (3) selon les revendications 1 à 10, l'ensemble disque de frein comprenant un disque de frein (31) définissant un trou et ayant une surface circonférentielle intérieure (311), dans lequel l'ensemble disque de frein comprend en outre un élément intermédiaire (34) couplé à la surface circonférentielle intérieure (311) du disque de frein (31), l'élément intermédiaire comprenant un métal ou un matériau d'alliage ;
dans lequel l'élément intermédiaire (34) comprend une couche de base (342) et une couche supplémentaire (341) combinées l'une à l'autre, dans lequel la couche de base (342) est couplée à la surface circonférentielle intérieure (311) du disque de frein (31).

13. Ensemble disque de frein selon la revendication 12, dans lequel :
l'élément intermédiaire (34) est une douille et, éventuellement, la douille est fixée par interférence ou soudée ou collée à la surface circonférentielle intérieure (311) du disque de frein (31) ;
et, éventuellement, la couche de base (342) est essentiellement composée de métal et la couche supplémentaire (341) est essentiellement composée d'un alliage de graphite.

14. Ensemble disque de roue pour le dispositif de freinage supplémentaire (3) selon les revendications 1 à 10, l'ensemble disque de roue comprenant un disque de roue (33) qui a un corps de disque de roue (333) et une extension (331), l'extension (331) ayant une surface circonférentielle extérieure (332), dans lequel l'ensemble disque de roue comprend en outre un élément intermédiaire (34) couplé à la surface circonférentielle extérieure (332) de l'extension du disque de roue (33), l'élément intermédiaire comprenant un métal ou un matériau d'alliage ;
dans lequel l'élément intermédiaire (34) comprend une couche de base (342) et une couche supplémentaire (341) combinées l'une à l'autre, dans lequel la couche de base (342) est couplée à la surface circonférentielle extérieure (332) de l'extension (331) du disque de roue (33).

15. Ensemble disque de roue selon la revendication 14, dans lequel :
l'élément intermédiaire (34) est une douille et, éventuellement, la douille est fixée par interférence ou soudée ou collée à la surface circonférentielle extérieure (332) de l'extension (331) du disque de roue (33) ;
et, éventuellement, la couche de base (342) est essentiellement composée de métal et la couche supplémentaire (341) est essentiellement composée d'un alliage de graphite ; et/ou
le disque de roue (33) est formé d'un seul tenant avec un pignon d'entraînement (2) d'un dispositif de transport de passagers.
